# EUROPEAN PATENT APPLICATION

(11) **EP 1 800 962 A1**
(43) Date of publication of application: **27.06.2007**
(21) Application number: 06118321.6
(22) Date of filing: 02.08.2006
(51) Int. Cl.: B60R 19/20, B60R 21/013, B60T 7/22

(54) **Apparatus for the external protection of means of transport from an impact with obstacles**

(30) Priority: 21.12.2005 IT KR20050001
(71) Applicant: Vaglico, Isidoro, 87061 Campana CS (IT); Passavanti, Saverio, 87063 Cariati CS (IT)
(72) Inventor: Vaglico, Isidoro, 87061 Campana CS (IT); Passavanti, Saverio, 87063 Cariati CS (IT)
(74) Representative: Papa, Elisabetta

(57) **Abstract**

An apparatus for the protection from an impact with obstacles (200) for a means of transport (100), particularly for a motor vehicle and the like, the means of transport (100) typically having an outer cover body; wherein the protection apparatus comprises a device (20) for absorbing the impact with the substantially deformable obstacle (200), having a first non-operative configuration (α) and a second operative configuration (β); and activation means (6,7,8,9) for activating said impact absorbing device (20), apt to selectively control the arrangement thereof in said second operative configuration (β), wherein said second operative configuration (β) is substantially external to the body of said means of transport (100) and the impact absorbing device (20) is activated in a time interval such as to anticipate the actual impact, so that said impact absorbing device (20) lies interposed between the means of transport (200) and the obstacle (100) at the instant of the actual impact.

## Description

The present invention relates to an apparatus for the protection from an impact with possible obstacles, intended for means of transport and the like; a method of activating such an apparatus; as well as a vehicle incorporating such a protection apparatus.

More particularly, this invention relates to the field of the manufacturing of safety systems that can typically be taken aboard vehicles, or optionally adaptable to aircrafts, watercrafts, and anyhow generally to means of transport.

More specifically, the present invention concerns the production of protection systems for the protection from an impact with obstacles by an airbag device, expandable substantially externally to the means of transport to which it is fitted, so as to preserve first of all the integrity of the structure of the means of transport and consequently enhance travel safety for driver and/or passengers onboard, ensuring their substantial safety.

The present invention finds useful employ in general in all means of transport, like e.g. motor vehicles, prone to be affected by an impact with unforeseen obstacles under conditions of relative motion.

To date, the safety systems commonly issued on the means of transport, and typically on motor vehicles, generally fall within two groups, being active or passive, respectively.

Among active systems, there may be numbered those systems intending to avoid the occurrence of an accident, substantially attaining to reduce the chances of a crash.

Said active systems, generally electronic, comprise, by way of example and denoted according to commercially known acronyms, the ABS (antilock braking system), the EBD (electronic brake distribution), the ESP (electronic stability programme) and the EHB (electro hydraulic brake).

Instead, passive protection systems intervene when the accident has already occurred and aim at reducing its consequences. Among these systems, there may be mentioned, e.g., the safety belts equipped with pretensioners; the collapsible pedals and steering wheel and column; or reference can be made to improving design solutions such as the manufacturing of the driver and passenger compartment of the means of transport with high-strength and programmed deformation steel; the use of deformable and elastic materials for the linings; a markedly rounded design of the body outside, with angularities reduced to a minimum; the use of shatterproof glass, of ergonomic headrests suitable for absorbing knocks.

Of primary relevance among passive safety systems, owing to its often lifesaving value, is certainly the airbag.

To date, various airbag typologies exist, like, e.g., front airbags for the drive side and/or the passenger side; airbags apt to be positioned at the rear seats; curtain-shaped airbags; airbags specifically contrived to protect head, knees or other particular body parts; airbags incorporating nonslip features for the front seat; all of said typologies being however based on a single operation mechanism.

In fact, active systems have not attained a development level such as to be infallible and do not ensure to preserve means of transport incorporating them from impacts that, under certain contingent conditions, may then be inevitable and therefore actually not preventable.

On the other hand, the ever stricter laws passed on the matter of travel safety onboard of means of transport, with particular reference to road safety, make ever more pressingly felt the need to optimize the protection devices aimed at safeguarding drivers and/or passengers and preserving the structure and functionality of the means of transport, in the sense of setting in preventive safety the means of transport and the driver and/or passengers with respect to the instant in which an impact against a possible obstacle occurs.

In fact, passive systems in use to date intervene as soon as the accident has occurred, being, by virtue of their technical features and calibrations, programmed to be effective substantially in the instants following the impact.

Moreover, they are conceived exclusively for safeguarding occupants of a means of transport, and neglect the aspect, however fundamental in terms of economy and of the structural integrity itself of the means of transport, of prevention of the damages, even external ones, which a means of transport may get following a collision with an obstacle.

The activation sensors of current airbags, typically located on the vehicle front and/or in the driving compartment, are traditionally operated by the inertial forces that are generated following a deceleration so significant as to match the occurrence of a front or near-front crash.

Sensors used on current airbags measure the negative gradient of speed and are calibrated so that substantially only following very violent collisions, front or near-front ones, a proportional signal is sent to the unit in charge of gas inflation and airbag explosive deployment, on the basis of several viable activation algorithms.

It follows that conventional airbags substantially activate only instants after the occurred impact, and not previously thereto or, at most, exactly thereat.

From a statistical standpoint, among road accidents the front ones are those causing the most severe effects.

All tests carried out on this subject by the most reliable certification committees in Europe, like, e.g., the EEVSC (European Enhanced Vehicle-safety Committee) or within the scope of car safety programs such as the EuroNCAP, highlight how currently marketed cars, though with sensible variations from design to design, to date exhibit many deficiencies with regard to passenger and pedestrian safety, as well as to safeguarding the integrity of the means of transport.

Moreover, the accident simulation conditions, no matter how severe, are not such as to exactly replicate criticalities occurring concomitantly to real crashes, and the results of crash tests, carried out in laboratory or on-road but anyhow simulated, are not entirely representative of conditions actually found.

Therefore, even motor vehicle models that are given the highest marks by said committees as a certification of their safety level, up to an assessment corresponding to the so-called "five-star", may actually be not assessed for stresses surpassing and not matching those set in crash tests.

In crash tests, typically a front impact is set at 40 mph, a side impact at 30 mph, a running over of a pedestrian at 25mph. At speeds higher than the test ones, no car may be deemed absolutely safe. E.g., it is amply proved that safety belts, however useful, perform an effective action up to 43 mph.

Neither the combined action of safety belts and conventional airbag ensures safety beyond a certain speed limit.

Currently, a remarkable limitation of internal airbags lies in that the explosion inside the compartment may be cause of traumas, even severe ones such as loss of sight, e.g. deriving from lid ejection on the face of front-seat occupants.

In its preferred embodiment introduced hereinafter, the protection apparatus according to the present invention is positioned frontally with respect to the means of transport, expressly intending to supplement and improve current safety systems with which vehicles are equipped, particularly in the event of front-type road accidents.

However, there may evidently be envisaged optional design variations of the protection apparatus according to the present invention, additional or alternative with respect to said preferred front embodiment, apt to allow the fitting up thereof even on a rear and/or side position with respect to the means of transport, so as to offer protection from obstacles impacting onto the means of transport at the rear and/or sideways thereof, respectively.

To date, there is no protection apparatus for a means of transport, such as, e.g. a vehicle, apt to absorb the impact with possible obstacles in case of crash, such as to provide an effective protection jointly for the occupants of such a means of transport and for any pedestrian in case of a running over thereof by said means of transport, concomitantly equipping said means of transport with a shield apt to preserve its external and/or internal structure and its functionality.

Moreover, in the known art of the reference field, there is no substantially passive protection apparatus that, also depending on the abovementioned results that it intends to attain, activates substantially before the impact and not merely following it, or at most instants after the occurred impact.

Hence, object of the present invention is to solve said problems, by proposing a protection apparatus for the protection of means of transport and the like from an impact with possible obstacles; a method of activating such an apparatus; as well as a motor vehicle incorporating said protection apparatus, as set forth in claim 1, in claims 16, 17 and in claim 18, respectively.

The protection apparatus according to the present invention ensures enhanced safety for the occupants of the compartment of a means of transport to which the apparatus is applied, jointly introducing technical features useful to the preservation of the integrity of said means of transport, as well as advantageously favourable to pedestrian safeguarding.

The protection apparatus according to the present invention advantageously implements an effective absorbing of the kinetic energy associated to the means of transport in motion.

Thanks to the design solution providing an operative configuration substantially external to the body of the means of transport, in case of accident the protection apparatus according to the present invention combines a reduction of the impact force concomitantly felt by occupants of the compartment of the means of transport and by any pedestrian with which the means of transport collides, with an effective structural shield action aimed at a substantial limiting of the damages suffered by the means of transport and/or by a possible obstacle opposing thereto.

Thus, it is advantageously and drastically decreased the degree of traumas sufferable by individuals involved in the accident, located internally as well as externally with respect to the means of transport concerned.

Concomitantly, it is preserved the structural and functional integrity of the means of transport involved in an accident, thanks to the absorbing of the initial impact obtained by the interposition of the protection apparatus between the portion of means of transport exposed to the impact and the obstacle.

This structural preservation aspect is definitely neglected by the philosophy applied to the design of current passive protection systems, essentially centred on the attainment of a substantial safety of the occupants of the means of transport involved in an accident.

Moreover, the activation modes of the apparatus according to the present invention are such that the protection is deployed substantially before the impact, in advance of the occurrence of the accident, thanks to the introduction of a distance measuring sensor system.

Evidently, this allow to attain a two-fold protection for the means of transport involved in an accident and for the individual occupants thereof, a protection all the more effective insofar as it anticipates the instant of the actual impact.

The protection system according to the present invention offers a shield apt to mitigate impact-deriving traumatic consequences concomitantly for the occupants of the compartment of the means of transport and for any pedestrian on which the means of transport impacts.

Thanks to its versatility, the protection device according to the present invention may advantageously and inexpensively be fitted to any typology and configuration of means of transport, and particularly to any motor vehicle model on the market, for its installation entailing no carrying out of costly and complex modifications on the original structure of the means of transport.

Hence, the shielding device according to the present invention is of easy installation and use, as well as of simple design and inexpensive production.

Further advantages, as well as the features and the operation modes of the present invention will be made apparent in the following detailed description of some embodiments thereof, given by way of example and without limitative purposes, making reference to the figures of the annexed drawings, wherein:
- Fig. 1 is a perspective view of a motor vehicle on which it is installed a protection system according to a first preferred embodiment of the present invention;
- Fig. 2 is a perspective view of the motor vehicle of Fig. 1, apt to schematically display the components of the above-introduced protection system;
- Fig. 3 is a perspective view of a detail of the compartment of the motor vehicle of Fig. 1, apt to depict a switch for activating the functions of the protection system according to the above-introduced preferred embodiment;
- Fig. 4A is a perspective view apt to illustrate the activation modes of the protection system according to the present invention, in advance of the occurrence of the front or partially front impact of the motor vehicle of Fig. 1 with an obstacle;
- Fig. 4B is a perspective view apt to illustrate the intervention modes of an airbag device constituting the protection system according to the present invention, expandable substantially externally to the body of the motor vehicle of Fig. 1 at the front or partially front impact of said motor vehicle with an obstacle;
- Fig. 5 is a partially sectional perspective view along line A-A of the airbag device of Fig. 4B, apt to illustrate the multilayer structure thereof;
- Fig. 6 is a flowchart apt to schematically illustrate the sequence of steps according to which there articulates the algorithm implementing the method of activating the protection system according to the present invention; and

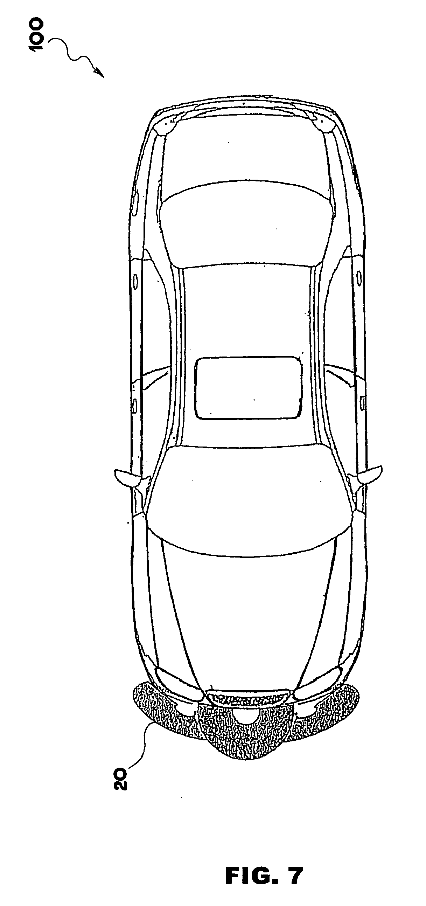

- Fig. 7 is a top plan view of the motor vehicle of Fig. 1, apt to highlight an operative configuration of the protection system according to the present invention, expanded substantially externally to the body of said motor vehicle.

In order to describe a preferred embodiment of the present invention, hereinafter reference will be made to the above indicated figures.

The apparatus for the protection from an impact with obstacles 200 for a means of transport 100 according to the present invention is described hereinafter according to some embodiments thereof, particularly adapted to the use on motor vehicles and, specifically, to absorb kinetic energy owned by motor vehicles concomitantly to collisions with substantially front obstacles.

Of course, the protection apparatus according to the present invention could undergo modifications functional to the application to means of transport with features different with respect to those exhibited by motor vehicles and/or to address different accident categories, e.g. nose-to-tail crashes or side crashes.

The means of transport, whatever their typology, typically have anyhow an external covering body, a compartment apt to house driver and/or passengers, and a speed adjustment system, such as a braking circuit in case of motor vehicles.

The protection apparatus according to the present invention comprises a device 20 for absorbing the impact with a possible obstacle 200.

Such an absorbing device 20, preferably substantially deformable, has a first non-operative configuration α and a second operative configuration β.

The arrangement of said impact absorbing device 20 in said second operative configuration β may be selectively controlled through activation means.

The protection device according to the present invention reaches said second operative configuration β in a time interval such as to anticipate the actual impact of said means of transport 100 with an obstacle 200 opposing thereto.

In order to jointly provide an effective protection to the occupants of the means of transport and to carry out a function of structural shield apt to preserve the structure itself of the means of transport, said second operative configuration β is substantially external to the body of the means of transport 1 and, with respect thereto, or with respect to the substantially projecting bumper or grille, substantially projecting.

Thus, thanks to the earlier timing of deployment with respect to the instant of the actual impact, and to the attainment of an operative configuration β substantially projecting from the body of the means of transport 100, the impact absorbing device 20 according to the present invention lies interposed between the means of transport 200 and the obstacle 100.

The abovementioned activation means may have manual triggering, e.g. an activation pressure may be exerted on a rapid triggering push button, suitably incorporated into a control console.

The pressure value required to give onto the rapid triggering push button the impulse useful to the manual triggering is preferably calibrated so as to imply an explicit will of activation.

Such a control console may also comprise a switch 9 for activating the functions of the protection apparatus, and preferably it is positioned so as to avoid involuntary operation by driver and/or passengers inadvertently contacting the console interfaces.

A manual activation of the protection apparatus according to the present invention may redundantly couple to an automatic activation mode, however in compliance with a fail-safe design philosophy commonly adopted in conceiving safety systems.

Said control console could be located on the dashboard, e.g. in a central position with respect to the body sides of the means of transport 100, for a ready accessibility jointly by driver and passengers, or in an intermediate position between the seats 10, at the centre tunnel, preferably behind the parking brake.

Therefore, preferably the push buttons of the control console will be well highlighted and positioned according to ergonomic criteria, as well as strategically with respect to the motions allowed to driver and/or passengers in the compartment 30 of the means of transport 100.

The abovementioned activation means may also provide a manual triggering, the two solutions -manual and automatic - being preferably combined in order to ensure a greater certainty of intervention in case of need, as set forth above.

According to a preferred embodiment of the present invention, the automatic triggering may be associated to a braking circuit 5 of the means of transport 100.

For this purpose, the braking circuit may be characterised by a parameter P, proportional to the braking force and having a predetermined critical value P_{cr}.

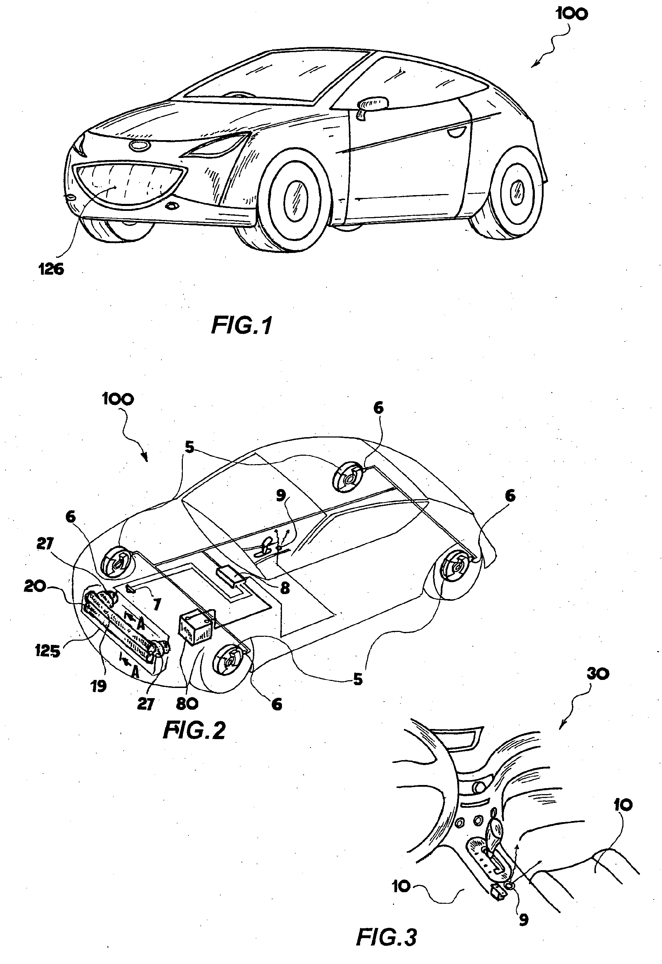

In this case, as highlighted in Fig. 2, the activation means of the protection apparatus may comprise a first sensor 6, apt to monitor the braking circuit 5 measuring the values of the characteristic parameter P thereof; and a second sensor 7, apt to detect the distance between the means of transport 100 and a possible obstacle 200.

Preferably, the sensor 7 of distance measuring type, e.g. a led or laser one, is shielded from external agents by means of an automatic opening mechanism, substantially conceived as a shutter lid, so that its functionality is never compromised.

Preferably, said second distance measuring detection is subordinate to a detecting by the sensor 6 of the reaching of the critical value P_{cr} of the predetermined characteristic parameter P.

A processor control unit 8, in communication with said first and second sensor 6,7, governs the operation of the protection apparatus according to the present invention.

In particular, the control unit 8 is apt to provide, when the presence of the obstacle 200 is detected at a distance d shorter than or equal to a set limit distance Dₛ, the positioning of the impact absorbing device 20 in the second operative configuration β.

Said operative configuration is substantially external to the body of the means of transport 100, so that the impact absorbing device lies interposed between the means of transport 100 and the obstacle 200 at the instant of the actual impact.

When, instead, the presence of the obstacle 200 is detected at a distance d greater than the set limit distance Dₛ, the control unit 8 is apt to provide the keeping of the impact absorbing device 20 in the first non-operative configuration α.

According to a second automatic operation mode and a constructive variant of the above-introduced embodiment, the automatic triggering may be made independent of the conditions of the braking circuit 5 of the means of transport 100.

In the case of an operative mode thus simplified of the apparatus according to the present invention, the second sensor 7, apt to detect the distance between the means of transport 100 and a possible obstacle 200, is freed from the first sensor 6 and selectively made permanently active.

Thus, it is attained the result that, even in the event of a driver and/or passengers of the means of transport 100 failing to timely spot the obstacle 200, the control unit 8 is however apt to provide, when the second sensor 7 detects the presence of the obstacle 200 at a distance d shorter than or equal to a set limit distance Dₛ, the positioning of the impact absorbing device 20 in the second operative configuration β, substantially external to the body of said means of transport 100.

Conversely, when the second sensor 7 detects the presence of the obstacle 200 at a distance d greater than the set limit distance Dₛ, the control unit 8 may provide the keeping of the impact absorbing device 20 in the first non-operative configuration α, waiting to check actual conditions of impending danger.

Thanks to such an operation mode of the apparatus according to the present invention in which the distance metering sensor 7 is kept permanently active, a remedy is found to the risk of failure by drivers and/or passengers to register the looming up of a danger.

On the other hand, the manual triggering option may be useful to strengthen the safety perception of the driver and/or passengers, with particular reference to driving difficulty conditions in which a loss of control of the means of transport is distinctly felt.

From this standpoint, the apparatus with manual triggering undertakes the function of anti-panic system, thanks to which a standard protection level is ensured when problems occur.

Thus, the driver could make use of the manual triggering when, timely realizing the real danger of collision, he/she intends to activate by him/herself the external protection apparatus as a precaution, e.g. in those stop-attempting conditions when the car, though braked to the utmost, tends anyhow to advance toward the obstacle, as it happens in cases of skidding on frozen or wet ground, on slippery grounds, or in case of brake malfunctioning. In this sense, the manual triggering option is a contrivance apt to strengthen the impression of certain operation of the protection apparatus by those aboard of the means of transport 100 and facing a dangerous braking situation.

Preferably, the manual triggering operation is permitted to the driver and to the passenger, typically sitting beside the driver, to allow anyhow the activation of the apparatus, in the event, e.g., of a driver's fainting or inattention, or for any other reason of lack of reaction by the driver.

The solution of an embodiment of the protection apparatus according to the present invention equipped with the sole manual triggering, with no electronic safety system with related software aboard, may be provided for the more inexpensive basic models of the present invention.

The sensor 7 may, e.g., be an infrared one; of radar type, thanks to the use of ultrashort electromagnetic waves; an ultrasound one; or result from a joint application of a combination of said technologies, in order to ensure a detection as timely and accurate as possible of the event of a criticality.

On such a timeliness depends a ready deployment in an operative configuration β of the impact absorbing device 20, preferably implementable in the space of milliseconds, so as to substantially anticipate the impact, and an effective interposition thereof between said means of transport 100 and the obstacle 200 at the instant of occurrence of the actual impact,.

There may also be provided plural intervention stages, by the use of a plurality of distance metering sensors 7, set according to respective calibrations, operable at respective distance ranges to the possible obstacle 200, in a progressive sequence proportionally to the criticality of the intervention required, according to a more or less sudden braking, respectively.

The first sensor 6, according to a preferred embodiment of the present invention, is a pressure sensor apt to detect the pressure level P inside the braking circuit 5.

In this case, the protection apparatus according to the present invention may be integrated to additional safety and/or control systems slaved to said braking circuit, like, e.g., those commercially known under the acronyms ABS (antilock braking system), EBD (electronic brake distribution), ESP (electronic stability programme) and EHB (electro hydraulic brake), interacting therewith.

Advantageously, the protection apparatus according to the present invention would therefore make use of pre-existing componentry, which is current on most modem cars.

According to a preferred embodiment of the present invention, as it is apparent from Figs. 2, 4B and 5, the protection apparatus according to the present invention comprises a substantially airbag-shaped impact absorbing device 20.

Thus, the impact absorbing device 20 is deployable from a recess 125 incorporated by the means of transport 100, toward the outside of the body of the means of transport 100, until assuming the second operative configuration β.

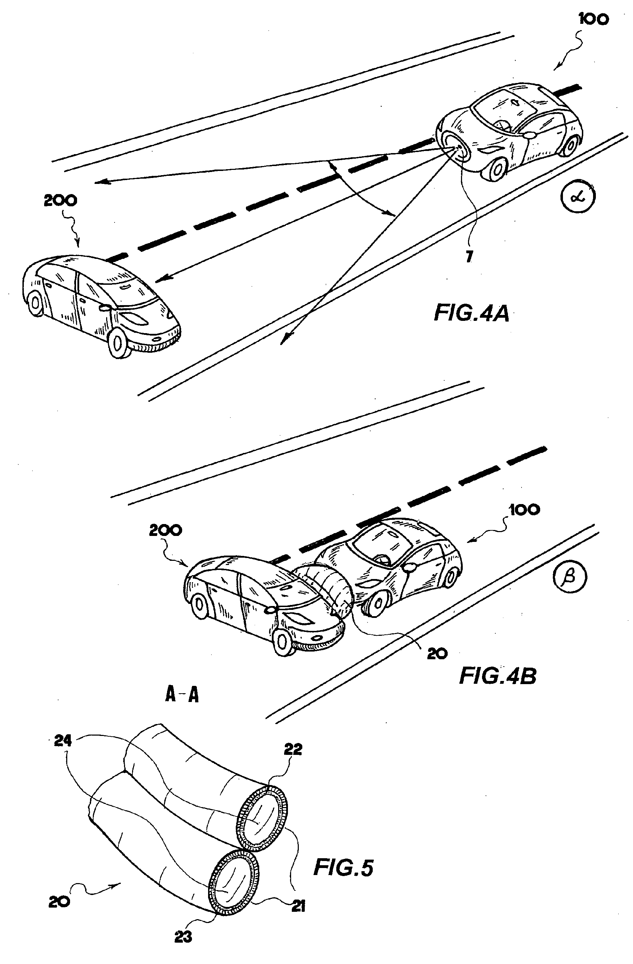

In Fig. 2 and in Fig. 5 it is illustrated how the impact absorbing device 20 may comprise expansible members 21, in the shape, e.g., of bags or cushions preferably made of rubber, coupled to the body in correspondence of the recess 125.

In the case at issue, the expansible members 21 may be a set of substantially tubular cushions, with high impact strength, apt to inflate in the space of a few milliseconds so as to anticipate the instant of impact with the obstacle 200.

The recess 125 depicted in Fig. 2 is a housing positioned substantially frontally to the means of transport 200, in front of the body of the means of transport 100 in correspondence of a bumper and/or grille 126.

The expansible members 21 in the first non-operative configuration α lie in a deflated state, and, in the second operative configuration β, lie in an inflated state.

There may be conceived a mechanism for retracting (collapsing) the bags 21, when in the last instance no impact and/or no structural damage to the means of transport 100 and/or to the external airbag have occurred.

Such a retracting (collapsing) mechanism could be made by a system for sucking the gases previously emitted for inflating the bags 21, so as to allow to the means of transport 100 an easy reaching of a repair, maintenance or checking station.

In case of internal airbags, the absorbing bags should necessarily be made of a material incorporating very strong fibres, like, e.g., Kevlar; and being easily collapsible, thanks to the introduction of valves apt to rapidly outlet inflating gases over the shortest viable time, after the bags have performed their containment action.

Obviously, this entails a strict constraint to an exact synchronization of the operative steps, which have to take place in a few milliseconds inside the compartment 30 of the car 100.

The normal operation of the internal airbag, besides implying a correct fastening of the safety belts, depends on a near-simultaneous taking place of the steps of inflating and deflating the bags 21, with a minimal time difference useful to allow for a few instants the effective support, by said bags, of a human body projecting forward owing to the impact force.

In case of external airbag, the requirements to be complied with for a correct operation of the absorbing device are less temporally strict, and an operation mode substantially anticipated with respect to the occurrence of the critical event, or of the impact; this, rather than into limit conditions, translates into a viable profitable use of materials less expensive, less experimentally advanced and therefore less prone to anomalous behaviour with respect to those required for the manufacturing of internal airbags.

In the case at issue, the design of the apparatus according to the present invention could be substantially simplified, and it could provide, for the manufacturing of the bags 21, materials with deformability features not necessarily heightened, as instead is required in case of internal airbags.

On the other hand, the thicknesses of the bags 21 should not necessarily be ultra-reduced; instead, the former could be increased so as to ensure a greater resisting section.

The present invention also allows to avoid complications related to the introduction of vent valves on the bags, such as have to be envisaged in case of internal airbags in order to ensure the sudden loosening of the internal pressure thereof at the impact of the human body with the bags.

By virtue of said differences, the protection apparatus according to the present invention allows the absorbing of increased values of impact energies, concomitantly ensuring a greater tightness and a greater resistance to deflection pressure. Materials useful for the external airbag can envisage rubbers of the type employed for the manufacturing of sports balls, like those adopted in baseball.

However, this type of rubber has quite reasonable costs.

The fact that the present invention is irrespective of the need of a sudden deflation, programmed however in internal airbags to allow the leaving of compartment occupants, entails a greater tightness to deflection of the airbag system during the collision.

As exemplified in Fig. 5, the function of the absorbing device 20 may be performed by substantially tubular bags 21 having a central core 22 of a first elastic material endowed with a certain rigidity; and an external casing 23 of a second elastic material preferably more deformable with respect to said first material.

Alternative and/or additional design solutions for the protection apparatus according to the present invention may comprise also an impact absorbing device 20 in the form of a protective shield, preferably of resistant rubber, apt to be projected from the first non-operative configuration α, substantially retracted with respect to the motor vehicle body, to the second operative configuration β, substantially deployed and projecting from the means of transport 100, so that the shield lies interposed between the means of transport 100 and the obstacle 200 at the instant of the actual impact.

The exposure of such a shield from a recess 125, followed by the related projection, may occur by sliding of a cover surface, e.g. by sliding of the bumper and/or the grille 126.

In order to strengthen the impact containment mechanism, besides said cushions or bags 21, there may be envisaged also deployable buffers 27, e.g. of rubber having regions with variable rigidities, equipped with damping springs.

The intervention of said buffers 27 may be provided simultaneously to the external airbag, the deployment from the respective housings in the chassis of the means of transport 100 occurring by means of related plungers.

Preferably, even when in the deploying configuration, the buffers 27 remain incorporated into the impact absorbing device 20 and do not project therefrom.

In light of the fact that the protection apparatus according to the present invention is apt to act on the outside of the means of transport 100, unconstrained by limitations related to the presence of driver and/or passengers in the compartment 30, the (even explosive) deployment of the absorbing device 20 in an operative configuration β can take place more suddenly, and therefore more violently with respect to what is allowed to internal airbags.

This entails the option of powering up the explosive force of the airbag, which therefore can act more rapidly without harming said persons.

Starting from the assumption that internal airbags are completely deployed in an infinitesimal time of about 30-50 milliseconds, an even more rapid deployment may be surmised for an impact absorbing device 20 intended to deploy towards the outside of the means of transport 100.

In fact, on the outside it is not necessary to take into account the time synchronism required in the known art between the steps of deploying the bags 21 and the forward advance of the individuals that, being subjected to the impact, have to be supported; or the extent of the explosion power and rapidity; or, again, the presence of removable lids that could hit said individuals in the face.

Thanks to the protection apparatus according to the present invention, damages to the external structures of the car are limited insofar as the impact is preventively absorbed by the rubber cushions 21, which interpose between the means of transport 100 and the obstacle 200, deploying as a protective padding on the front of the means of transport 100.

Such decreased structural damages translate into lower costs for repairing vehicles involved in an accident.

An external airbag proves useful also in case the obstacle 200 is a pedestrian.

To date, crash tests by all of the committees most reliable on the matter of safety indicate a scarce or insufficient protection in case of a running over a pedestrian. However, typically a pedestrian running-over crash test is conducted at a conventional speed of 25 mph, scarcely representative of actual impact conditions in case of accident.

With the intervention of an external airbag as provided by the present invention, the running over is less traumatic, as the violence of the collision would be softened.

A further advantage exhibited by the protection apparatus according to the present invention is a reduction of the stresses inside the compartment 30, in light of the fact that they are partially dissipated to the outside beforehand, with the entailed enhancement of protection even inside the compartment 30.

Were the protection apparatus according to the present invention to be mass-installed on all cars of new production, e.g. with the modes depicted in Fig. 2, in case of front accident between two cars, a respective impact absorbing device 20 would concomitantly deploy on the front of each of said colliding cars.

In that case, the impact force would be doubly absorbed, because, at the predetermined safety distance Dₛ, two respective external airbag blocks would deploy, apt to impact the one against the other.

Further object of the present invention is to introduce an activation method of a protection apparatus as the one described in detail above, apt to preserve a means of transport 100 in the impact with obstacles 200, where said means of transport 100 typically has an outer cover body; and a braking circuit 5, characterised by a parameter P proportional to the braking force and having a predetermined critical value P_{cr}.

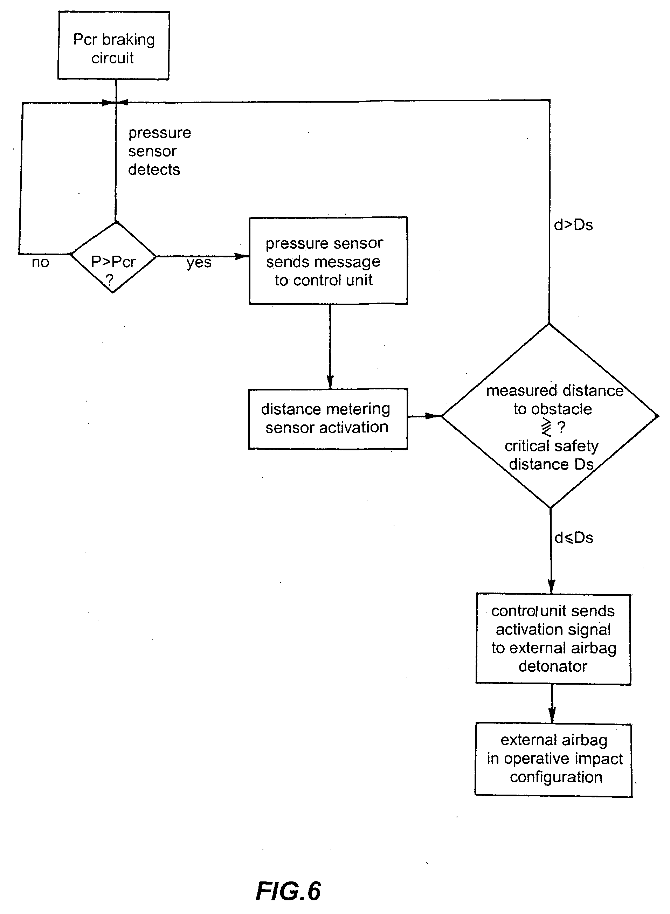

Such a method, schematized in the flowchart reported in Fig. 6, comprises first of all the step of measuring by the first sensor 6 said characteristic parameter P; then, if the predetermined critical value P_{cr} of said parameter P is detected, the step of sending a proportional signal to said control unit 8.

The control unit 8 provides the detecting of the distance d of the means of transport 100 to a possible obstacle 200 by the second sensor 7.

If said second sensor 7 detects a distance to the possible obstacle shorter than or equal to a set limit distance Dₛ, the method provides the step of arranging for the sending of a proportional signal to the control unit 8 so that the latter, in a time interval such as to anticipate the actual impact, may provide the positioning of the impact absorbing device 20 in an operative configuration β, substantially external to the body of the means of transport 100.

Thus, the absorbing device 20 lies interposed between the means of transport 100 and the obstacle 200 at the moment of the actual impact.

If instead the second sensor 7 detects a distance to the possible obstacle 200 greater than the limit distance Dₛ, the activation method according to the present invention provides the step of keeping the impact absorbing device 20 in a non-operative configuration α.

Said method may be modified, in the sense that the automatic triggering of the protection apparatus may be made independent of the detecting of a critical value for a characteristic parameter P, such as the pressure of the braking circuit 5 and/or speed gradient of the means of transport 100, the triggering being rather directly subordinated to the checking by sensors of the presence of an obstacle and therefore to the measuring of the distance between said obstacle 200 and the means of transport 100 with respect to a limit distance Dₛ.

Such a second activation mode is conceivable with a permanently active distance metering sensor 7.

To the above-described apparatus and method for the protection of a means of transport 100 from an impact with obstacles 200, as well as to a motor vehicle 100 incorporating such an apparatus, a person skilled in the art, in order to satisfy further and contingent needs, may effect several further modifications and variants, all however encompassed by the protective scope of the present invention, as defined by the appended claims.

## Claims

1. An apparatus for the protection from an impact with obstacles (200) for a means of transport (100), particularly for a motor vehicle and the like, said means of transport (100) typically having an outer cover body;
wherein said protection apparatus comprises:
- a device (20) for absorbing the impact with said obstacle (200), said device being substantially deformable and having a first non-operative configuration (α) and a second operative configuration (β); and
- activation means (6,7,8,9) for activating said impact absorbing device (20), apt to selectively control the arrangement thereof in said second operative configuration (β),
wherein said second operative configuration (β) is substantially external to the body of said means of transport (100) and said impact absorbing device (20) is activated in a time interval such as to anticipate the actual impact, so that said impact absorbing device (20) lies interposed between said means of transport (200) and said obstacle (100) at the instant of the actual impact.

2. The protection apparatus according to claim 1, wherein said activation means provide manual triggering.

3. The protection apparatus according to claim 1 or claim 2, wherein said activation means provide automatic triggering.

4. The protection apparatus according to claim 3, wherein said automatic triggering is associated to a braking circuit (5) of said means of transport (100), said braking circuit (5) being **characterised by** a parameter (P) proportional to the braking force and having a predetermined critical value (P_{cr});
wherein said activation means of said protection apparatus comprises:
• a first sensor (6), apt to monitor said braking circuit (5) measuring the values of said characteristic parameter (P) thereof;
• a second sensor (7), apt to detect the distance between said means of transport (100) and a possible obstacle (200), when the critical value (P_{cr}) of said predetermined characteristic parameter (P) is detected; and
• a processor control unit (8) in communication with said first and second sensor (6,7);
said control unit (8) being apt to provide, when the presence of said obstacle (200) is detected at a distance (d) shorter than or equal to a set limit distance (Dₛ), the positioning of said impact absorbing device (20) in said second operative configuration (β), substantially external to the body of said means of transport (100), so that said impact absorbing device lies interposed between said means of transport (100) and said obstacle (200) at the instant of the actual impact; whereas, when the presence of said obstacle (200) is detected at a distance (d) greater than said set limit distance (Dₛ), the keeping of said impact absorbing device (20) in said first non-operative configuration (α).

5. The protection apparatus according to claim 4, wherein said first sensor (6) is a pressure sensor (P).

6. The protection apparatus according to claim 4 or 5, integrated to additional safety and/or control systems slaved to said braking circuit, like, e.g., the ABS and/or EBD and/or EHB systems.

7. The protection apparatus according to one of the claims 4 to 6, wherein said automatic triggering may be made independent of said braking circuit (5) of said means of transport (100), in the sense that said second sensor (7), apt to detect the distance between said means of transport (100) and a possible obstacle (200), is freed from said first sensor (6) and selectively made permanently active, so that, even in the event that a driver of said means of transport (100) fails to spot said obstacle (200), said control unit (8) is however apt to provide, when said second sensor (7) detects the presence of said obstacle (200) at a distance (d) shorter than or equal to a set limit distance (Dₛ), the positioning of said impact absorbing device (20) in said second operative configuration (β), substantially external to the body of said means of transport (100), so that said impact absorbing device (20) lies interposed between said means of transport (100) and said obstacle (200) at the instant of the actual impact; whereas, when said second sensor (7) detects the presence of said obstacle (200) at a distance (d) greater than said set limit distance (Dₛ), the keeping of said impact absorbing device (20) in said first non-operative configuration (α).

8. The protection apparatus according to one of the claims 3 to 7, wherein said activation means of said protection apparatus (20) comprises switching means (9) for selectively activating the functions of said apparatus.

9. The protection apparatus according to claim 8, wherein said switching means (9) is positioned between the seats (10) of the compartment (30) of said means of transport (100), in a position such as to avoid any involuntary turning on and/or triggering.

10. The protection apparatus according to one of the claims 1 to 9, wherein said impact absorbing device (20) is substantially airbag-shaped, deployable from a recess (125) incorporated by said means of transport (100), toward the outside of said body of said means of transport (100), until assuming said second operative configuration (β).

11. The protection apparatus according to claim 10, wherein said impact absorbing device (20) comprises expansible members (21) coupled to said body in correspondence of said recess (125) that, in said first non-operative configuration (α), lie in a deflated state, and, in said second operative configuration (β), lie in an inflated state.

12. The protection apparatus according to claim 10 or 11, wherein said recess (125) is a housing positioned substantially frontally to said means of transport (200), in correspondence of a bumper and/or grille (126) of said means of transport.

13. The protection apparatus according to claim 12, wherein said bumper and/or grille (126) is positioned in front of said body of said means of transport.

14. The protection apparatus according to one of the claims 11 to 13, wherein said expansible members (21) are a set of substantially tubular cushions with high impact strength, apt to inflate in the space of a few milliseconds so as to anticipate the instant of impact with said obstacle (200).

15. The protection apparatus according to one of the claims 1 to 9, wherein said impact absorbing device (20) is a protective shield apt to be projected from said first non-operative configuration (α), substantially retracted with respect to said body, to said second operative configuration, substantially deployed and projecting from said means of transport (100) so that said shield lies interposed between said means of transport (100) and said obstacle (200) at the instant of the actual impact.

16. Method of activating an apparatus for the protection from an impact with obstacles (200) for a means of transport (100), particularly for a motor vehicle and the like, said means of transport (100) typically having:
- an outer cover body; and
- a braking circuit (5), **characterised by** a parameter (P) proportional to the braking force and having a predetermined critical value (P_{cr});
wherein said protection apparatus comprises:
• a first sensor (6), apt to monitor said braking circuit (5) measuring the values of said characteristic parameter (P) thereof;
• a second sensor (7), apt to detect the distance between said means of transport (100) and a possible obstacle (200), when the predetermined critical value (P_{cr}) of said characteristic parameter (P) is detected; and;
• a device (20) for absorbing the impact with said substantially deformable obstacle (200), having a first non-operative configuration (α) and a second operative configuration (β); and
• a processor control unit (8) in communication with said first and second sensor (6,7);
comprising the steps of:
- measuring by said first sensor (6) said characteristic parameter (P);
- if said predetermined critical value (P_{cr}) of said parameter (P) is detected, sending a proportional signal to said control unit (8);
- providing by means of said control unit (8) the detecting of the distance (d) of said means of transport (100) to a possible obstacle (200) by said second sensor (7);
- if said second sensor (7) detects a distance to said possible obstacle (200) shorter than or equal to a set limit distance (Dₛ), providing the sending of a proportional signal to said control unit (8);
- in a time interval such as to anticipate the actual impact, providing, by means of said control unit (8), the positioning of said impact absorbing device (20) in an operative configuration (β), substantially external to the body of said means of transport (100), so that said absorbing device (20) lies interposed between said means of transport (100) and said obstacle (200) at the instant of the actual impact ; whereas
- if said second sensor (7) detects a distance to said possible obstacle (200) greater than said limit distance (Dₛ), keeping the impact absorbing device (20) in a non-operative configuration (α).

17. A method of activating an apparatus for the protection from an impact with obstacles (200) for a means of transport (100), particularly for a motor vehicle and the like, said means of transport (100) typically having an outer cover body;
wherein said protection apparatus comprises:
• a sensor (7), apt to permanently detect the distance between said means of transport (100) and a possible obstacle (200);
• a device (20) for absorbing the impact with said substantially deformable obstacle (200), having a first non-operative configuration (α) and a second operative configuration (β); and
• a processor control unit (8) in communication with said first and second sensor (6,7);
comprising the steps of:
- detecting by said sensor (7) a possible obstacle (200);
- if said obstacle (200) is detected, sending a proportional signal to said control unit (8);
- providing by means of said control unit (8) the detecting of the distance (d) of said means of transport (100) to said obstacle (200) by said sensor (7);
- if said sensor (7) detects a distance to said obstacle (200) shorter than or equal to a set limit distance (Dₛ), providing the sending of a proportional signal to said control unit (8);
- in a time interval such as to anticipate the actual impact, providing, by means of said control unit (8), the positioning of said impact absorbing device (20) in an operative configuration (β), substantially external to the body of said means of transport (100), so that said absorbing device (20) lies interposed between said means of transport (100) and said obstacle (200) at the instant of the actual impact ; whereas
- if said sensor (7) detects a distance to said obstacle (200) greater than said limit distance (Dₛ), keeping said impact absorbing device (20) in a non-operative configuration (α).

18. A motor vehicle comprising a protection apparatus as defined in one of the claims 1 to 15.
